# EUROPEAN PATENT APPLICATION

(11) **EP 4 711 901 A1**
(43) Date of publication of application: **18.03.2026**
(21) Application number: 25200337.1
(22) Date of filing: 04.09.2025
(51) Int. Cl.: G06F 3/03, G06F 3/033, G06F 1/08, G06F 3/0354, G06F 3/038

(54) **COMPUTER IMPLEMENTED METHOD FOR OPERATING A COMPUTER MOUSE WITH IMPROVED TRACKING AND SURFACE CLASSIFICATION MANAGEMENT**

(30) Priority: 11.09.2024 EP 24199768
(71) Applicant: EM Microelectronic-Marin SA, 2074 Marin-Epagnier (CH)
(72) Inventor: SABY, Jérôme, 2022 Bevaix (CH); FARRELL, Josh, Colorado Springs, 80924 (US); SCHLACHTER, Jérémy, 1584 Villars-le-Grand (CH)
(74) Representative: ICB SA

(57) **Abstract**

The invention deals with a computer mouse and a computer-implemented method for operating a computer mouse comprising an optical sensor, the method comprising steps for:
- calculating a first/tracking optical sensor flash rate,
- generating tracking flashes in order identify relative displacement along an underlying surface,
- calculating a second/surface optical sensor flash rate taking into account the first/tracking optical sensor flash rate,
- generating surface flashes in order identify surface characteristics along the underlying surface, so that a surface flash is generated between two tracking flashes.

## Description

### Field of the invention

The present invention relates to a computer implemented method for operating a computer mouse.

### Background of the invention

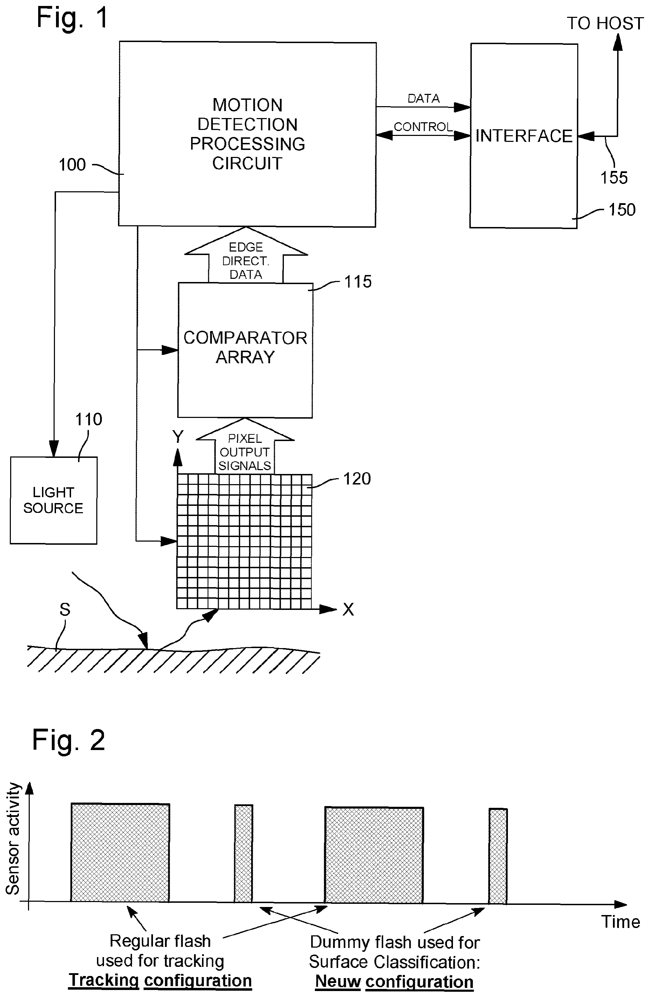

A computer peripheral device uses an optical sensor to calculate the displacement and generates reports to the computer. Also, the optical sensor has to operate on various type of surfaces. An example is shown in figure 1.

Surface classification and sensor tuning for a computer peripheral device is known from US20230120650A1.

However, there is a need to deal with detecting surface classifications. But tracking displacement and detecting surfaces are two opposite problems.

The state-of-the-art solution has limitations:
- do not change the sensor settings during the application: settings are done once, operation needs to scope with it;
- applying same setting for tracking and additional operation;
- changing of settings should not disturb regular operation (flash rate regulation).

The invention aims to propose a new embodiment, in particular for office applications and/or gaming applications.

### Summary of the invention

According to a first aspect, the invention proposes a computer mouse computer-implemented method for operating a computer mouse comprising a microcontroller and an optical sensor, the method comprising steps, in the following order, or with any other order, for:
- calculating a first or tracking optical sensor flash rate,
- generating tracking flashes in order to identify relative displacement along an underlying surface,
- calculating a second or surface optical sensor flash rate taking into account the tracking optical sensor flash rate,
- generating surface flashes between two tracking flashes in order to identify surface characteristics along the underlying surface, a flash duration of surface characteristics flash being strictly less than a flash duration of tracking flash.

Invention lets to be more sensitive to the surface pattern and to provide a behaviour of the optical sensor not be different across a given surface while not limiting speed of processing and computing other steps.

The computer mouse comprises an optical sensor emitting flashes and calculating displacements, a communication module to communicate with a host MCU computer and a microprocessor coupled to the optical sensor.

According to one embodiment, the flash duration of surface characteristics flash is less than the flash duration of tracking flash, preferably divided by two.

Preferably, the flash timing of surface characteristics flash is emitted approximately half the time between flashes of the tracking flashes.

Preferably, the time period between two tracking flashes is constant or variable.

According to one embodiment, a said column average deviation method can be used to classify surface. The surface detection is based on a comparison of a column average to a reference. This is also used during tracking operation to detect lift.

Preferably the method comprises a step for comparing the average light detected per pixel participating to a surface characteristics classification, this step comprising:
- acquiring an image associated to the underlying surface, having a pixel array,
- detecting an average light for each pixel and associate the average light value with a column size or number,
- comparing the average column light to an internal reference, preferably a programmable reference or the average of the complete image.

According to another embodiment, a statistic method can be implemented to classify surface.

According to another aspect of the invention, there is proposed a computer mouse comprising:
- a housing,
- a communication module coupled to a host computer device,
- an optical sensor configured to generate optical data via flashes corresponding to an underlying surface,
- a microcontroller coupled to the optical sensor, configured to implement the computer-implemented method according to any of preceding features of the previous aspect.

The main effect on this implementation using the regular activity scheme (prior art operation) was leading to a trade-off between normal operation (displacement reports) and the surface classification. The invention splits the two operation modes, allowing optimal operation for both functionalities. Tracking and surfaces flashes are interleaved. Also, it lets to detect the surface accurately without impacting the quality of the displacement reports.

### Brief description of the drawings

The present invention will be described subsequently in more detail with reference to the attached drawing, given by way of examples, but in no way limited thereto, in which:
- Figure 1 is an example of state-of-the-art architecture;
- Figure 2 is a time diagram showing a surface flash is generated between two tracking flashes;
- Figure 3 is an illustration of a said column average deviation method to classify surface.

### Detailed description of the invention

With reference to figure 2, there is illustrated a computer-implemented method for operating a computer mouse comprising a housing including: a microcontroller, an optical sensor and a communication module coupled to a host computer device. The optical sensor is capable to generate flashes along an underlying surface and to acquire images resulting in whole or in part from the reflection of the light from these flashes on this surface. This microcontroller is connected to the optical sensor and the communication module. This microcontroller is configured to execute an embedded algorithm to implement this method for operating, notably by controlling the sensor and the communication module. The method comprises steps for:
- calculating a tracking optical sensor flash rate,
- generating tracking flashes in order identify relative displacement along an underlying surface,
- calculating a surface optical sensor flash rate taking into account the tracking optical sensor flash rate,
- generating surface flashes in order identify surface characteristics along the underlying surface, so that a surface flash is generated between two tracking flashes as illustrated in figure 2.

According to figure 2, the flash duration of surface characteristics flash is less than the flash duration of displacement or tracking flashes, preferably divided approximately by two. In other words, the flash duration of surface characteristics is twice as less than the flash duration of tracking flash. In other embodiment, the flash duration of surface characteristics flash is six times less than the flash duration of displacement or tracking flashes.

In other terms, this method comprises the step for generating surface flashes between two tracking flashes in order to identify surface characteristics along the underlying surface, a flash duration of surface characteristics flash being strictly less than a flash duration of tracking flash.

The method for operating comprises a step for acquiring the light reflected by the underlying surface exclusively from the surface flashes reflection. This step for acquiring includes a filtering process configured to select the light reflected by the underlying surface resulting from the surface flashes reflection from among the other lights reflected by this surface.

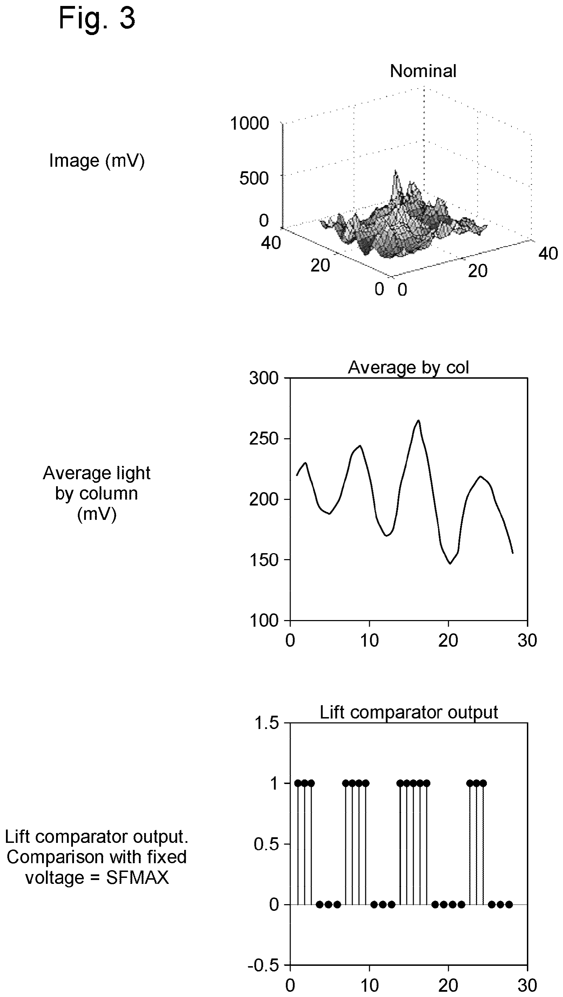

With reference to figure 3, there is illustrated according to one embodiment a method of classifying surface characteristics comprising a method of comparing the average light detected per pixel. More specifically, the method for operating comprises a step for comparing the average light detected per pixel participating to a surface characteristics classification, this step comprising:
- acquiring an image associated to the underlying surface, having a pixel array, in other words, defining a pixel array of the image associated with the underlying surface;
- detecting an average light for each pixel and associate the average light value with a column size or number;
- comparing the average column light to an internal reference, preferably a programmable reference or the average of the complete image.

Particularly, in order to detect the surface characteristics, the microcontroller executes the embedded algorithm and will decode the average light by column.

The image (voltage indication indicating the illumination of each pixel) is averaged by column.

The average column light is compared to an internal reference. This reference can be selected from a programmable reference or the average of the complete image. The comparator reference can be changed during operation in order to have the best settings to detect the surface characteristics. For example, each value of the average column is compared to an internal reference of 200mV.

Then the pattern given by the comparator output are decoded by the microprocessor in order to extract the first valid column, the first column higher than the reference, starting for the highest number. The result of the processing is a column number. In the illustration, the highest valid column is 25. For one flash, a column number is attributed.

The surface classification lasts a given count of flashes, for example 30. Flash to flash, the image will change, and the high column number will vary. The minimum column number and the maximum column number are stored for 30 flashes and then the difference (max - min) is compared to an internal threshold (7 in the current application), which is the criteria to distinguish the surface.

## Claims

1. A computer-implemented method for operating a computer mouse comprising a microcontroller and an optical sensor able to generate flashes along an underlying surface, the method comprising steps for:
- calculating a tracking optical sensor flash rate,
- generating tracking flashes in order to identify relative displacement along an underlying surface,
- calculating a surface optical sensor flash rate taking into account the tracking optical sensor flash rate,
- generating surface flashes between two tracking flashes in order to identify surface characteristics along the underlying surface, a flash duration of surface characteristics flash being strictly less than a flash duration of tracking flash.

2. The method according to the preceding claim, comprises a step for acquiring the light reflected by the underlying surface exclusively from the surface flashes reflection.

3. The method according to the preceding claim, in which the step for acquiring includes a filtering process configured to select the light reflected by the underlying surface resulting from the surface flashes reflection from among the other lights reflected by this surface.

4. The method according to any of preceding claims, in which the flash duration of surface characteristics twice less than the flash duration of tracking flash.

5. The method according to any of preceding claims, in which the flash timing of surface characteristics flash is emitted approximately half the time between flashes of the tracking flashes.

6. The method according to any of the preceding claims, in which the time period between two tracking flashes is constant.

7. The method according to claims 1 to 5, in which the time period between two tracking flashes is variable.

8. The method according to any of preceding claims, comprises a step for comparing the average light detected per pixel participating to a surface characteristics classification, this step comprising:
- acquiring an image associated to the underlying surface, having a pixel array;
- detecting an average light for each pixel and associate the average light value with a column size or number;
- comparing the average column light to an internal reference, preferably a programmable reference or the average of the complete image.

9. A computer mouse comprising:
- a housing,
- a communication module coupled to a host computer device,
- an optical sensor configured to generate optical data via flashes corresponding to an underlying surface,
- a microcontroller coupled to the optical sensor, configured to implement the computer-implemented method according to one of the preceding claims.
